# EUROPÄISCHE PATENTSCHRIFT

(11) **EP 2 599 587 B1**
(45) Veröffentlichungstag und Bekanntmachung des Hinweises auf die Patenterteilung: **20.04.2016**
(21) Anmeldenummer: 13157153.1
(22) Anmeldetag: 10.07.2008
(51) Int. Cl.: B24B 19/14, B24B 49/16, B24B 27/00, B23P 6/00

(54) **Anordnung zur Instandhaltung von Gasturbinenschaufeln**
Device for maintaining gas turbine blades
Dispositif destiné à l'entretien d'aubes de turbines à gaz

(30) Priorität: 12.07.2007 EP 07013719
(43) Veröffentlichungstag der Anmeldung: 05.06.2013
(62) Teilanmeldung aus: 08773967.8
(73) Patentinhaber: Lufthansa Technik AG, 22335 Hamburg (DE)
(72) Erfinder: Reinmöller, Ulf, 22459 Hamburg (DE); Panten, Matthias, 24568 Kaltenkirchen (DE); Kerschbaumer, Ernst, 24568 Oersdorf (DE)
(74) Vertreter: Glawe, Delfs, Moll

(56) Entgegenhaltungen:
- DE-A1- 3 532 667
- JP-A- 2002 301 659
- US-A1- 2005 159 840

## Beschreibung

Die Erfindung betrifft eine Anordnung, mit deren Hilfe die Konturen der Eintrittskanten von gebrauchten Gasturbinenschaufeln bearbeitet werden können.

Bei Gasturbinen kommen Schaufeln sowohl in der Kompressorals auch in der Turbinenstufe zum Einsatz. Diese Schaufeln weisen in der Regel ein Flügelprofil auf. Um einen möglichst hohen Wirkungsgrad zu erreichen ist dieses Profil für die Schaufeln jeder einzelnen Turbinenstufe optimiert. Teil dieser Optimierung ist auch die Formgebung der Eintrittskante.

Im Bereich der Gasturbinen genießt der Hochdruckkompressorbereich einen sehr hohen Stellenwert, da er einen großen Einfluss auf die Leistung des Gesamtsystems hat. Die dort eingesetzten Kompressorschaufeln deformieren sich allerdings im Laufe der Zeit durch aerodynamische Belastung und verschiedene andere Einflüsse. Im Fall von Flugzeugtriebwerken, welche eine Sonderform der Gasturbine darstellen, können diese sonstige Einflüsse beispielsweise aus angesaugtem Staub, Hagel oder sonstigen festen Projektilen bestehen.

Durch Abweichungen von der Idealform der Schaufeln kommt es zu Effizienzverlusten des Triebwerks. Andererseits sind die einzelnen Schaufeln in ihrer Herstellung zu kostenintensiv, so dass ein regelmäßiger Austausch beschädigter Schaufeln durch Neuteile nicht sinnvoll erscheint. Es besteht also Bedarf, beschädigte Schaufeln kostengünstig so instand zu setzen, dass sich der Wirkungsgrad des Triebwerks wieder erhöht.

Durch öffentliche Vorbenutzung ist ein Verfahren bekannt, in dem die Eintrittkanten beschädigter Schaufeln manuell nachgeschliffen werden. Das Ziel dieser Bearbeitung ist das Ausgleichen von Unebenheiten. Dafür muss jede Schaufel einzeln von einem Mechaniker an eine Schleifmaschine herangeführt werden. Bei diesem Verfahren gelingt es in der Regel allerdings nur, die Eintrittskante zu glätten, nicht jedoch ihr eine optimierte Form zu geben. Denn obwohl das Profil der nachbearbeiteten Schaufel nicht mehr dem eines Neuteils entspricht, gibt es mehr oder minder günstige Querschnitte im Bereich der Eintrittkante von Triebwerksschaufeln, welche direkte Auswirkungen auf die Effizienz des gesamten Triebwerkes haben.

Im Stand der Technik (JP-A-2002301659) ist weiterhin bekannt, einzelne Arbeitsschritte bei der mechanischen Bearbeitung von Bauteilen durch Roboter durchführen zu lassen. Roboter bieten den Vorteil, dass die Abweichungen von dem gewünschten Ergebnis in der Regel geringer ausfallen als bei manueller Bearbeitung. Da Roboter stets einem vorher festgelegten Bewegungsablauf folgen, eignen sie sich allerdings nur für die Bearbeitung von Bauteilen, die von vorneherein in einem relativ engen Toleranzspektrum liegen. Im Falle von Gasturbinenschaufeln ist das in der Regel nur bei Neuteilen gegeben.

Der Erfindung liegt die Aufgabe zu Grunde, die Instandsetzung von gebrauchten Triebwerksschaufeln dahingehend zu verbessern, dass durch eine automatisierte Bearbeitung der Schaufeln wiederholbar eine optimierte Kontur erreicht wird.

Die erfindungsgemäße Lösung liegt in der Anordnung gemäß dem unabhängigen Anspruch 1. Vorteilhafte Weiterbildungen ergeben sich aus den Unteransprüchen.

Die erfindungsgemäße Anordnung zur Wiederherstellung einer optimierten Kontur der Eintrittskanten von Gasturbinenschaufeln umfasst einen computergesteuerten Roboter zum Führen einer einzelnen Gasturbinenschaufel, mindestens eine Schleifmaschine im Bewegungsradius des Roboters für die spanende Bearbeitung dieser Gasturbinenschaufel, sowie eine Rechnereinheit zur Steuerung des Roboters, die einen Datenspeicher umfasst, auf dem der Bewegungsablauf des Roboters abgelegt ist, wobei die mindestens eine Schleifmaschine einen Sensor für den Anpressdruck des Werkstücks aufweist und dessen Messsignalausgang mit der Rechnereinheit verbunden ist. Der abgespeicherte Bewegungsablauf ist zur Überführung einer Schaufel aus einem vorher ermittelten statistischen mittleren Verschleißzustand in eine ebenfalls vorher ermittelte oder berechnete Designkontur ausgebildet.

Die erfindungsgemäße Anordnung weist eine geeignete Schleifmaschine zum spanenden Bearbeiten eines am Arbeitspunkt mit Anpresskraft angelegten Werkstücks auf. Sie kann eine rotierende, durch einen Motor angetriebene Schleifscheibe aufweisen. Die Schleifscheibe kann in Anpressrichtung auf einer Bahn verschiebbar gelagert sein und eine Vorrichtung zur Erzeugung eines definierten Anpressdrucks aufweisen.

Zunächst seien einige im Rahmen der Erfindung verwendete Begriffe erläutert:
Der Begriff Gasturbinenschaufel ist generisch und umfasst sowohl die Schaufeln der Kompressorstufen als auch die der Turbinenstufen.

Mit Schaufeltyp wird die unterschiedliche Ausgestaltung von Schaufeln der einzelnen Kompressor- und Turbinenstufen einer Gasturbine erfasst. Auch Schaufeln gleicher Stufen unterschiedlicher Triebwerke sind in der Regel von einem unterschiedlichen Schaufeltyp.

Der Aktionsradius eines Roboters bezeichnet den Bereich, in dem der Roboter agieren kann. Bei einem stationären Roboter wird dieser Bereich durch die maximale Reichweite des Auslegers bestimmt.

Der Roboter ist in der Lage einzelne Gasturbinenschaufeln an Mess- und Bearbeitungsmaschinen vorbeizuführen. Der Roboter ist dazu vorzugsweise computergesteuert und weist die für die Bearbeitung notwendigen Freiheitsgrade auf. Dies kann beispielsweise durch die Verwendung eines handelsüblichen 6-Achsen-Roboters gewährleistet werden. Der Bewegungsablauf des Roboters ist in einem Datenspeicher abgespeichert. Vorzugsweise ist vorzusehen, dass in diesem Datenspeicher eine Vielzahl von Bewegungsabläufen abgespeichert ist, die je nach zu bearbeitendem Schaufeltyp abgerufen werden können. Weiterhin bevorzugt ist es, wenn der Roboter mit einem auf den zu bearbeitenden Schaufeltyp abgestimmten Greifarm ausgestattet ist, der es ermöglicht, Gasturbinenschaufeln selbstständig aufzunehmen und abzulegen. Bei der Bearbeitung verschiedener Schaufeltypen mit der gleichen Anordnung kann es vorteilhaft sein, wenn der Roboter selbständig den Greifarm auswechseln kann, um ein optimales Greifen jedes Schaufeltyps sicherzustellen. Dazu ist bevorzugt ein Magazin vorhanden, in dem die Greifarme für den Roboter zugänglich abgelegt sind.

Im Aktionsradius des Roboters ist mindestens eine Schleifmaschine angeordnet. Diese zeichnet sich dadurch aus, dass sie den Anpressdruck eines Werkstückes an die Schleifscheibe misst. Dieser Messwert kann an den Computer, der den Roboter steuert, übermittelt und im Bewegungsablauf des Roboters berücksichtigt werden. Dementsprechend ist das Ergebnis des Bearbeitungsvorganges nicht mehr ausschließlich von der Geometrie der Gasturbinenschaufel im Ausgangszustand abhängig. Abweichungen in der Geometrie können vielmehr durch Vergleich des gemessenen Anpressdruckes mit einem I-dealwert berücksichtigt werden.

Die mit der erfindungsgemäßen Anordnung hergestellte oder wiederhergestellte optimierte Kontur der Gasturbinenschaufel (auch Designkontur genannt) wird empirisch und/oder mathematisch entwickelt bzw. berechnet. Erfindungsgemäß ist vorgesehen, dass ein typischer Verschleißzustand eines Turbinenschaufeltyps ermittelt wird, vorzugsweise durch Bilden des statistischen Mittels des Ist-Zustands aus einer Vielzahl, bevorzugt etwa 100 bis 500 Schaufeln eines bestimmten Typs. Ferner werden bevorzugt Toleranzbereiche um diesen statistischen mittleren Verschleißzustand herum definiert, innerhalb derer eine Gasturbinenschaufel erfindungsgemäß wieder aufgearbeitet werden kann. Wie weiter unten erläutert, können außerhalb dieses Toleranzbereiches befindliche Schaufeln bzw. jene, deren zugeordnetes Bearbeitungsprogramm nicht mit dem gewählten übereinstimmt, vor dem Bearbeitungsvorgang durch eine geeignete Messung (bspw. Signalstärke eines magnetischen Sensors) erfasst und aussortiert werden.

Das Parametrisieren der Schleifmaschine erfolgt in einer Art und Weise, dass der Bearbeitungsvorgang eine Schaufel aus dem vorher ermittelten statistischen mittleren Verschleißzustand in die ebenfalls vorher ermittelte oder berechnete Designkontur überführt. Die erfindungsgemäß vorgesehene Messung des Anpressdrucks der zu bearbeitenden Schaufel an das Werkzeug (bevorzugt der Schleifscheibe) der Schleifmaschine erlaubt es, dass, bevorzugt durch Berücksichtigung im Bewegungsablauf des Roboters und/oder eine verschiebbare Lagerung der Schleifscheibe, jede einzelne Gasturbinenschaufel mit einer individuellen Verschleißkontur, die zwar von dem mittleren statistischen Verschleißzustand abweicht aber noch innerhalb des Toleranzbereichs liegt, dennoch vollständig oder weitgehend in die vorher ermittelte Designkontur überführt wird. Dadurch entfällt die Notwendigkeit, jede einzelne Gasturbinenschaufel vor dem Bearbeitungsprozess im Detail zu vermessen.

Die Erfindung ermöglicht somit ein automatisiertes einfaches und schnelles Aufbereiten von Gasturbinenschaufeln, bei denen vor dem eigentlichen Schleifvorgang jede einzelne Schaufel nur daraufhin überprüft werden muss, ob sie in den vorgegebenen Toleranzbereich fällt bzw. das korrekte Bearbeitungsprogramm für den betroffenen Schaufeltyp gewählt wurde. Der genaue Ist-Zustand jeder einzelnen Schaufel innerhalb des Toleranzbereichs muss erfindungsgemäß weder festgestellt noch bei der Vorprogrammierung bzw. Parametrisierung des Schleifprozesses berücksichtigt werden.

Vorzugsweise befinden sich im Aktionsradius des Roboters mindestens zwei Schleifmaschinen, die vorzugsweise mit Schleifscheiben anderer Konsistenz und/oder Größe bestückt sind, um so ein verbessertes Endresultat des gesamten Bearbeitungsschrittes und/oder Zeitersparnis zu erreichen. Dadurch kann die Bearbeitungszeit von Schaufeln, die aufgrund ihrer Formgebung die Bearbeitung mit Schleifscheiben unterschiedlicher Radien oder Breiten erfordern, reduziert werden, da ein zeitaufwändiger Wechsel der Schleifscheiben wie bei nur einer Schleifmaschine nicht vonnöten ist. Die Kompressorschaufel der 1. Stufe des Triebwerkstyps CFM56 z.B. erfordert aufgrund ihrer Formgebung im Tip-Bereich die Bearbeitung mit einer kleinen Schleifscheibe, während die übrigen Bereiche mit einer großen Schleifscheibe bearbeitet werden können. Erfordern unterschiedliche Schaufeltypen Schleifscheiben aus verschiedenen Grundmaterialien (z.B. Titan- oder Stahllegierungen) und/oder von unterschiedlicher Größe oder Breite, kann ebenfalls auf einen Schleifscheibenwechsel verzichtet werden. Somit können verschiedene Schaufeltypen bearbeitet werden, ohne dass es zu einem zeitaufwändigen Schleifscheibenwechsel kommen muss. Weiterhin ist bevorzugt, dass der Roboter die Schleifscheiben auf den Schleifmaschinen selbstständig auswechseln kann. Dazu ist ein entsprechendes Roboterwerkzeug vorzusehen, dass vorzugsweise ähnlich wie die Greifarme gewechselt werden kann. Bevorzugt ist es ein Magazin, welches vom Roboter erreicht werden kann, mit den für die Bearbeitung verschiedener Schaufeltypen notwendigen Schleifscheiben vorzusehen.

Auch wenn die erfindungsgemäße Anordnung Abweichungen von einer idealisierten Ausgangsform der gebrauchten Gasturbinenschaufeln erlaubt, so sind einige Schaufeln zu einem solchen Maß degradiert, dass eine Instandsetzung durch ausschließlich spanende Bearbeitung nicht mehr in Frage kommt. Um diese vor Beginn des eigentlichen Bearbeitungsvorganges auszusortieren, werden die einzelnen Gasturbinenschaufeln vorzugsweise an einem Messgerät vorbeigeführt, welches mindestens eine charakteristische Größe des Bauteils misst. Bei dieser charakteristischen Größe kann es sich beispielsweise um die Sehnenlänge des Flügelprofils handeln. Unterschreitet die gemessene Größe einer Gasturbinenschaufel einen festgelegten Grenzwert, so wird diese Schaufel vorzugsweise vor Beginn der spannenden Bearbeitung aussortiert.

Um Schaufeln, die nicht des Typs sind, der dem statistischen mittleren Verschleißzustand zu Grunde liegt, vor dem Bearbeitungsvorgang aussortieren zu können, kann ein magnetischer Sensor vorgesehen sein. Der Roboter führt dann nach dem Greifen der Gasturbinenschaufel aus der Box diese mit einem schaufeltypabhängigen Abstand an dem magnetischen Sensor vorbei. Die Gasturbinenschaufel wird dabei parallel zu ihrem Profil an dem Sensor vorbeigeführt, womit die Länge der Gasturbinenschaufel detektiert werden kann. Über das Rückgabesignal des magnetischen Sensors kann (bspw. anhand der Signalstärke) festgestellt werden, ob eine Gasturbinenschaufel des vorgegebenen Typs oder aber eines anderen Typs gegriffen wurde. Der Sensor gibt kein Signal zurück, sofern keine oder nur eine kleine Gasturbinenschaufel gegriffen wurde oder aber die Länge einer gegriffenen Gasturbinenschaufel den oben erwähnten Abstand überschreitet und so überhaupt nicht in das Messfeld des magnetischen Sensors gelangt.

Um die Abweichungen bei der Bearbeitung der Gasturbinenschaufeln möglichst gering zu halten, sind die Achsen des Roboters vorzugsweise so angeordnet, dass die Totzeitglieder bei Bewegungen senkrecht zur Schleifscheibe möglichst klein sind. Dadurch wird erreicht, dass die Entfernung vom Mittelpunkt der Schleifscheibe zum Werkstück exakt eingestellt werden kann.

Um einen kontinuierlichen Betrieb der Anordnung zu gewährleisten, kann eine Vorrichtung vorgesehen sein, die noch zu bearbeitende Gasturbinenschaufeln in den Aktionsradius des Roboters hineinbringt und bereits bearbeitete aus diesem heraustransportiert. Eine Mehrzahl von Gasturbinenschaufeln kann dazu bevorzugt in Boxen zusammengefasst werden, was die Logistik erleichtert. Durch eine solche Vorrichtung ist ein vollautomatischer 24/7-Betrieb möglich.

Das mit der beanspruchten Anordnung durchführbare Verfahren umfasst grundsätzlich die für den Betrieb der beschriebenen Anordnung bevorzugte Handlungsabfolge.

Darüber hinaus können auch während des Schleifvorgangs noch Beschädigungen an der Gasturbinenschaufel festgestellt werden, die eine Instandsetzung durch die erfindungsgemäße Anordnung verbieten. Überschreitet der gemessene Anpressdruck festgelegte und im Datenspeicher abgelegte Toleranzen, so kann daraus geschlossen werden, dass das Werkstück zu stark von der idealen Ausgangsgeometrie abweicht. Die in der Bearbeitung befindliche Gasturbinenschaufel kann daraufhin aussortiert werden. Durch den gemessenen Anpressdruck kann auch eine Fehlfunktion des Roboters festestellt werden. Kommt es bspw. zu einer Roboterachsüberlast, d.h. der Roboter drückt die in der Bearbeitung befindliche Gasturbinenschaufel zu stark gegen die Schleifscheibe, kann der gesamte Prozess abgebrochen werden. Durch einen solchen Nothalt können weitergehende Beschädigungen an der Gasturbinenschaufel und/oder Teilen der erfindungemäßen bzw. zur Durchführung des erfindungemäßen Verfahrens benötigte Anordnung vermieden werden.

Die beanspruchte Anordnung kann eine besonders geeignete Schleifmaschine umfassen.

Die Schleifmaschine umfasst einen Motor, der eine austauschbare Schleifscheibe antreibt, wodurch Material von einem am Arbeitspunkt mit Anpressdruck anliegendem Werkstück abgetragen wird. Die Schleifscheibe - vorzugsweise zusammen mit ihrem Antriebsmotor - sind verschiebbar gelagert. Dabei ist die Bahn der Verschiebung so gestaltet, dass sich die Scheibe vom Arbeitspunkt wegbewegen kann. Die Schleifscheibe ist also so gelagert, dass sich der Anpressdruck durch Verschiebung derselben genau einstellen lässt. Um dies zu erreichen, ist eine Antriebsvorrichtung vorgesehen, welche die Schleifscheibe entlang der beschriebenen Bahn bewegen kann und somit den Anpressdruck einstellbar macht.

Vorzugsweise ist die Bahn, auf welcher die Schleifscheibe bewegt wird, ausschließlich senkrecht zu deren Rotationsachse angeordnet. Dadurch werden Querverschiebungen der Schleifscheibe gegenüber dem Werkstück unterdrückt. Die Form der Bahn ist zunächst beliebig, bevorzugt sind allerdings geradlinige oder kreisförmige Formen.

Als eine besonders günstige Möglichkeit, eine Kreisbahn der Schleifscheibe zu erreichen, hat sich eine Pendelaufhängung von Antriebsmotor und Schleifscheibe herausgestellt. Dabei sind die beiden Komponenten an einer einzigen Achse oberhalb ihrer eigenen Position aufgehängt, um welche sie frei schwingen können.

Um den Anpressdruck erfassen zu können, ist ein entsprechender Sensor vorzusehen. Dieser ist so anzubringen, dass er unabhängig von der Position der Schleifscheibe auf der Verschiebungsbahn gleichbleibend exakte Werte liefert.

Zur Erzeugung des eigentlichen Anpressdruckes kann vorgesehen sein, die Gravitation auszunutzen. Im Falle der Pendelaufhängung wird dies erreicht, wenn das Pendel während der Bearbeitung entsprechend ausgelenkt ist. Für das nötige Gewicht zur Erzeugung eines ausreichend großen Anpressdruckes können neben dem Eigengewicht des Antriebsmotors und/oder der Schleifscheibe Zusatzgewichte vorgesehen sein. Bei anderen Bahnformen kann ein Zusatzgewicht über entsprechende Umlenkung die nötige Kraft zur Erzeugung des Anpressdruckes aufbringen. Bevorzugt ist es aber, wenn der Anpressdruck durch eine - bspw. elektrische - Antriebseinheit erzeugt wird. Dadurch wird der erzeugte Druck gleichzeitig regelbar.

Um das Werkstück bei Ausfall der für die Anpressdruckerzeugung vorgesehenen Antriebseinheit vor Beschädigungen zu schützen, kann vorgesehen sein, dass sich die Schleifscheibe in einem solchen Fall z.B. aufgrund von Gravitation vom Werkstück wegbewegt.

Die beschriebene Pendelaufhängung der Schleifscheibe ist beispielsweise in der Lage, die Vorderkante einer Gasturbinenschaufel auch dann in die gewünschte Designkontur zu überführen, wenn diese Vorderkante Abweichungen von etwa 2 bis 3 mm relativ zum statistischen mittleren Verschleißzustand aufweist oder beispielsweise durch Ungenauigkeiten beim Ergreifen der Schaufel durch den Roboter Winkelabweichungen von bis zu 4° hinsichtlich der Winkelstellung vorliegen, mit der diese Vorderkante relativ zur statistisch ermittelten mittleren Winkelstellung an das Schleifwerkzeug herangeführt wird.

Die Erfindung wird nachfolgend unter Bezugnahme auf die beigefügten Zeichnungen erläutert, in der je ein vorteilhaftes Ausführungsbeispiel der erfindungsgemäßen Anordnung sowie Vorrichtung dargestellt ist. Es zeigen:
- Fig. 1: eine funktionelle Darstellung der beispielhaften Anordnung;
- Fig. 2: ein Ausführungsbeispiel einer erfindungsgemäßen Schleifmaschine; und
- Fig. 3: eine schematische Darstellung zur Funktionsweise eines magnetischen Sensors zur Feststellung des Schaufeltyps.

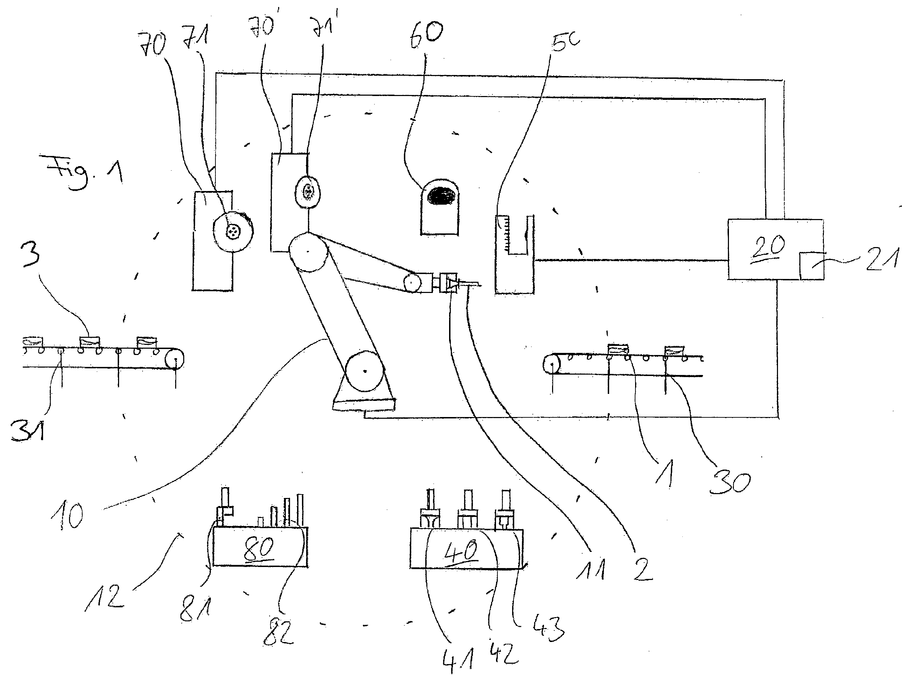

Fig. 1 zeigt einen 6-Achsen-Roboter 10, an dessen beweglichen Ende ein Greifarm 11 angebracht ist. Die maximale Reichweite des Roboters 10 bildet den Aktionsradius 12. Der Roboter 10 wird von der Rechnereinheit 20 mit Datenspeicher 21 gesteuert.

Über das Transportband 30 werden unbearbeitete, gebrauchte Gasturbinenschaufeln 1 in den Aktionsradius 12 des Roboters 10 transportiert. Mit seinem Greifarm 11 kann der Roboter 10 jeweils eine dieser Gasturbinenschaufeln 2 greifen.

Damit der Roboter 10 die Gasturbinenschaufel 2 sicher führen kann, steht dem Roboter 10 ein Magazin 40 mit verschiedenen Greifarmen 41, 42, 43 im Aktionsradius 12 zur Verfügung, aus dem sich der Roboter 10 selbst bedienen kann, so dass sich am Roboter 10 immer ein für die zu bearbeitende Schaufel 2 passender Greifarm 11 befindet.

In dem dargestellten Ausführungsbeispiel ist die Reihenfolge der Schaufeltypen der unbearbeiteten Gasturbinenschaufeln 1 in dem Datenspeicher 21 der Rechnereinheit 20 abgespeichert. Hierzu ist es nötig, dass die Reihenfolge in den Datenspeicher 21 eingegeben wird. Dies kann manuell geschehen. Es ist aber auch möglich, dass der Typ der Gasturbinenschaufeln 1 durch Sensoren festgestellt und der Rechnereinheit 20 übermittelt wird. Bei dieser Alternative entfällt die manuelle Eingabe vollständig. Ebenso ist es möglich, mehrere Gasturbinenschaufeln 1 in einer Box zusammenzufassen, wobei sich in einer Box immer nur Schaufeln gleichen Typs oder Schaufeln in einem festen Anordnungsmuster befinden. Dadurch lässt sich der Eingabeaufwand deutlich reduzieren, da Informationen nur noch pro Box und nicht mehr pro Schaufel eingeben werden müssen.

Nachdem der Roboter 10 eine zu bearbeitende Schaufel 2 sicher gegriffen hat, führt er sie an einem im Aktionsradius 12 befindlichen Messgerät 50 vorbei. Mit diesem Messgerät 50 wird mindestens eine charakteristische Größe der Schaufel 2 gemessen. Bei dieser charakteristischen Größe kann es sich beispielweise um die Sehnenlänge des Flügelprofils der Schaufel 2 handeln. Der Messwert wird dann in der Rechnereinheit 20 mit einem Mindest- und/oder Maximal-Sollwert verglichen. Sollte eine zu große Abweichung festgestellt werden, wird die Schaufel 2 vor Beginn des Bearbeitungsvorganges aussortiert und in den Behälter 60 abgeworfen. Zum Beispiel durch manuelles Aufschweißen von Material können die im Behälter 60 landenden Schaufeln aber teilweise soweit wiederhergestellt werden, dass sie nach erneutem Durchlaufen der Anordnung wieder in einer Gasturbine eingesetzt werden können.

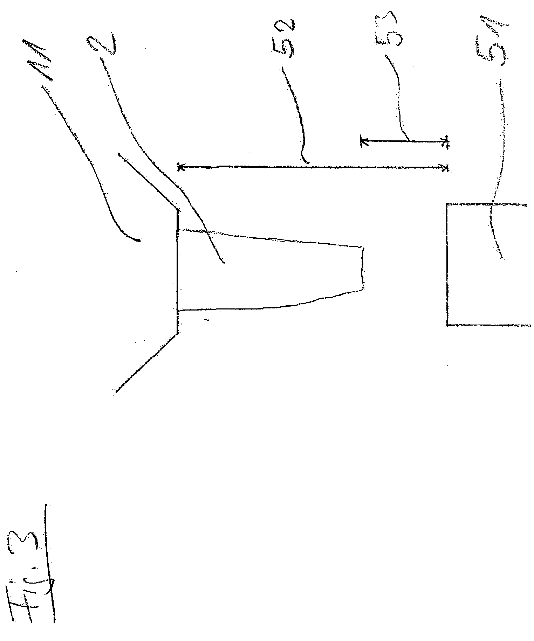

Das Messgerät kann auch dazu ausgebildet sein, vor Beginn der Bearbeitung feststellen zu können, ob die gegriffene Schaufel 2 den Typus aufweist, der dem statistischen mittleren Verschleißzustand zu Grunde liegt. Dazu kann im Messgerät 50 ein magnetischer Sensor 51 (in Fig. 1 nicht dargestellt) vorgesehen sein. Die Funktionsweise des magnetischen Sensors 51 wird weiter unten anhand von Fig. 3 näher beschrieben.

Befindet sich die Schaufel 2 im Toleranzbereich der Messung am Messgerät 50 und/oder weist den Typus auf, der dem statistischen mittleren Verschleißzustand zu Grunde liegt, wird sie an eine Schleifmaschine 70 oder 70' herangeführt. Der Einsatz von zwei Schleifmaschinen 70, 70' bietet den Vorteil, dass - ohne einen zeitaufwändigen Schleifscheibenwechseln - für die Bearbeitung der Schaufel 2 immer zwei Schleifscheiben 71, 71' mit unterschiedlicher Körnung und/oder Durchmesser zur Verfügung stehen. Dadurch kann das Bearbeitungsergebnis weiter verbessert werden. Wahlweise können aber auch nur eine oder mehr als die zwei dargestellten Schleifmaschinen 70, 70' zum Einsatz kommen.

Abhängig zum Schaufeltyp der zu bearbeiteten Schaufel 2 können die Schleifscheiben 71, 71' durch den Roboter 10 gewechselt werden. Dafür stehen in einem Magazin 80 ein entsprechendes Roboterwerkzeug 81, sowie eine Vielzahl an Schleifscheiben 82 zur Verfügung.

Die Schleifmaschinen 70, 70' zeichnen sich durch einen Sensor für den Anpressdruck der Schaufel 2 auf die Schleifscheiben 71, 71' aus. Die Messsignale dieser Sensoren werden an die Rechnereinheit 20 übermittelt und können so im Bewegungsablauf des Roboters 10 berücksichtigt werden. Dadurch ist es möglich, auch Schaufeln 2 die von einer Idealform abweichen noch zu bearbeiten. Das Ergebnis des Bearbeitungsvorganges ist also nicht mehr nur von der Geometrie der Gasturbinenschaufel 2 im Ausgangszustand abhängig.

Sollte sich während der Bearbeitung an den Schleifmaschinen 70, 70' herausstellen, dass die Schaufel 2 zu stark von einer Idealform abweicht, so landet sie im Behälter 60. Gleiches gilt für solche Gasturbinenschaufeln, für die mit einem Sensor festgestellt wurde, dass sie nicht den Typus aufweisen, der dem statistischen mittleren Verschleißzustand zu Grunde liegt.

Nach erfolgter und erfolgreicher Bearbeitung der Schaufel 2 wird diese zu anderen, bereits bearbeiteten Schaufeln 3 auf ein Transportband 31 gelegt, welches die Schaufeln 3 aus dem Aktionsradius 12 des Roboters 10 herausbringt. Dabei muss das Band für den Abtransport 31 nicht von dem für die Anlieferung 30 getrennt ausgeführt sein. Es ist ebenso möglich ein gemeinsames Transportband zu verwenden. Beim Einsatz von Boxen kann weiterhin vorgesehen sein, dass bearbeitete Schaufeln 3 wieder in die Box an ihren ursprünglichen Platz einsortiert werden.

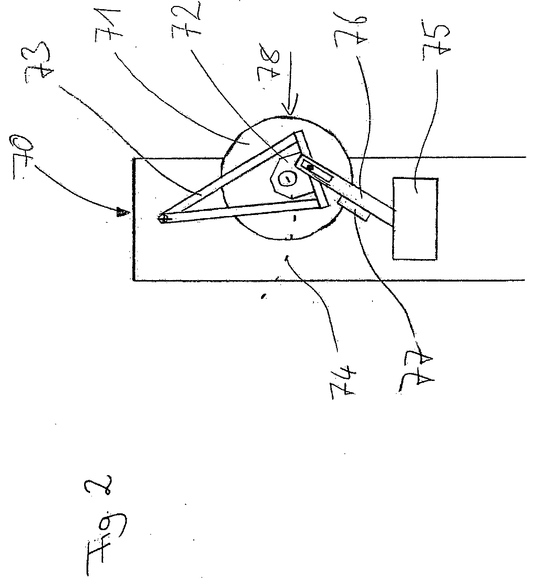

In Fig. 2 ist ein Ausführungsbeispiel einer erfindungsgemäßen Schleifmaschine dargestellt. Die Schleifmaschine 70 umfasst eine Schleifscheibe 71, die durch einen Motor 72 angetrieben wird. Motor 72 und Schleifscheibe 71 sind auf einem Pendel 73 angeordnet. Das Pendel 73 ist oberhalb des Motors 72 drehbar gelagert. Motor 72 und Schleifscheibe 71 können sich also auf einer Kreisbahn 74 bewegen.

Um die Position der Schleifscheibe 71 auf der Kreisbahn 74 genau einzustellen, ist eine Antriebseinheit 75 vorgesehen, die über einen Ausleger 76 mit dem Pendel 73 verbunden ist. An diesem Ausleger 76 befindet sich eine Spannungsmessdose 77, mit deren Hilfe es möglich ist, den durch den Pfeil 78 angedeuteten Anpressdruck eines Werkstückes (nicht dargestellt) auf die Schleifscheibe 71 zu ermitteln. Durch den Anpressdruck 78 entsteht nämlich eine Biegebeanspruchung im Ausleger 76. Es sind aber natürlich auch beliebige andere Messverfahren möglich. Ebenso ist es denkbar, den Antrieb des Pendels anders zu gestalten.

In der Darstellung befindet sich das Pendel 73 in Schleifposition, d.h. in dieser Position wird das Werkstück an die Schleifscheibe 71 herangeführt und die Antriebseinheit 75 erzeugt genügend Kraft, um das Pendel 73 trotz Anpressdruck 78 in dieser Position zu halten. Das Pendel befindet sich während des Schleifvorgangs also nicht in Null-Lage.

In dem Fall, dass die Antriebseinheit 75 ausfällt oder der Anpressdruck aufgrund eines anderen Defektes nicht aufrecht gehalten werden kann, bewegt sich die Schleifscheibe 71 automatisch vom Werkstück weg. Dies geschieht aufgrund der Gravitation, die das Pendel 73 zusammen mit Motor 72 und Schleifscheibe 71 in die Null-Lage zurückführt. Eine Beschädigung des Werkstückes wird so vermieden.

Anhand der schematischen Darstellung in Fig. 3 wird nun die Funktionsweise eines magnetischen Sensors 51 zur Überprüfung des Typs einer durch den Greifarm 11 gehaltenen Schaufel 2 beschrieben. Die Schaufel 2 wird durch den Roboter (hier nicht dargestellt) an dem magnetischen Sensor 51 vorbeigeführt, und zwar vorzugsweise in einer Ebene parallel zum Profil der Schaufel 2. Der Abstand 52 zwischen dem magnetischen Sensor 51 und dem Greifarm 11 ist dabei abhängig von dem erwarteten Schaufeltyp so gewählt, dass für eine Schaufel des erwarteten Schaufeltyps ein definierter Abstand 53 zwischen der Spitze der Schaufel 2 und dem magnetischen Sensor 51 entsteht.

Der magnetische Sensor 51 gibt ein Signal abhängig von dem Abstand 53 aus, der von der Rechnereinheit 20 (hier nicht dargestellt) verarbeitet werden kann. Wird der Abstand 53 nicht eingehalten, wird die im Greifarm 11 befindliche Schaufel 2 nicht als Schaufel 2 des Typs, der dem statistischen mittleren Verschleißzustand zu Grunde liegt, identifiziert und die Schaufel wird aussortiert.

Ist der Abstand 53 bei einer Schaufel 2 zu groß oder befindet sich keine Schaufel 2 im Greifarm 11, wird der Sensor 51 kein Signal liefern. Der Prozess wird dann ebenfalls abgebrochen. Ist die Schaufel 2 länger als der Abstand 52, kann sie nicht an dem Sensor 51 vorbeigeführt werden. Auch in diesem Fall kann der Prozess abgebrochen werden und die Schaufel wird aussortiert.

## Patentansprüche

1. Anordnung zur Durchführung eines Verfahrens zur Wiederherstellung einer optimierten Kontur der Eintrittskanten von Gasturbinenschaufeln, bei dem eine Gasturbinenschaufel (2) an einer oder mehrerer Schleifmaschine(n) (70, 70') so vorbeigeführt wird, dass aufgrund des Nachfahrens eines in einem Datenspeicher (21) abgespeicherten Bewegungsablaufs die gewünschte Kontur erreicht wird, umfassend einen computergesteuerten Roboter (10) zum Führen einer einzelnen Gasturbinenschaufel (2), mindestens eine Schleifmaschine (70, 70') im Aktionsradius (12) des Roboters (10) für die spanende Bearbeitung dieser Gasturbinenschaufel (2), sowie eine Rechnereinheit (20) zur Steuerung des Roboters (10), die einen Datenspeicher umfasst (21), auf dem der Bewegungsablauf des Roboters (10) abgelegt ist, wobei die mindestens eine Schleifmaschine (70, 70') ein Werkzeug (71, 71') sowie einen Sensor für den Anpressdruck des Werkstücks aufweist, dessen Messsignalausgang mit der Rechnereinheit (20) verbunden ist, **dadurch gekennzeichnet, dass** der abgespeicherte Bewegungsablauf zur Überführung einer Schaufel aus einem vorher ermittelten statistischen mittleren Verschleißzustand in eine ebenfalls vorher ermittelte oder berechnete Designkontur ausgebildet ist.

2. Anordnung nach Anspruch 1, **dadurch gekennzeichnet, dass** am Roboter (10) ein Greifarm (11) vorgesehen ist, mit dem das selbstständige Greifen von Gasturbinenschaufeln (2) an ihren Füßen möglich ist; wobei vorzugsweise der Greifarm (11) austauschbar gestaltet ist und ein Magazin (40) für verschiedene Greifarme (41, 42, 43) vorgesehen ist, aus dem sich der Roboter (10) selbstständig bedienen kann; und wobei weiter vorzugsweise ein Roboterwerkzeug (81) vorgesehen ist, durch welches ein automatisches Austauschen des Werkzeugs (71, 71') an der Schleifmaschine (70, 70') möglich ist.

3. Anordnung nach Anspruch 1 oder 2, **dadurch gekennzeichnet, dass** das Werkzeug als Schleifscheibe (71, 71') ausgestaltet ist und dass die Bewegungsachsen des Roboters (10) so ausgerichtet sind, dass die Totzeitglieder bei Bewegungen senkrecht zur Schleifscheibe (71, 71') möglichst gering sind.

4. Anordnung nach einem der Ansprüche 1 bis 3, **dadurch gekennzeichnet, dass** ein Sensor (50) zur Messung der Länge einer Gasturbinenschaufel (2) vorgesehen ist.

5. Anordnung nach einem der Ansprüche 1 bis 4, **dadurch gekennzeichnet, dass** die Schleifmaschine zum spanenden Bearbeiten eines am Arbeitspunkt mit Anpresskraft angelegten Werkstücks eine rotierende, durch einen Motor (72) angetriebene Schleifscheibe (71) umfasst; dass die Schleifscheibe in Anpressrichtung auf einer Bahn verschiebbar gelagert ist; und dass eine Vorrichtung (75, 76) zur Erzeugung eines definierten Anpressdrucks (78) vorgesehen ist.

6. Anordnung nach Anspruch 5, **dadurch gekennzeichnet, dass** die Bahn (74), auf der die Schleifscheibe (71) verschiebbar ist, in der Ebene der Schleifscheibe liegt und geradlinig oder kreisförmig ist.

7. Anordnung nach Anspruch 6, **dadurch gekennzeichnet, dass** eine Pendelaufhängung (73) für die Schleifscheibe (71), vorzugsweise auch für den Motor (72), vorgesehen ist.

8. Anordnung nach einem der Ansprüche 5 bis 7, **dadurch gekennzeichnet, dass** die Bahn (74), auf der die Schleifscheibe (71) verschiebbar ist, so ausgelegt ist, dass bei Ausfall der Antriebseinheit (75) zur Erzeugung oder Regelung des Anpressdrucks die Schleifscheibe (71) selbstständig, vorzugsweise aufgrund von Gravitation, vom Werkstück wegbewegt wird.

## Claims

1. Arrangement for performing a method for remanufacturing an optimised contour of the leading edges of gas turbine blades, in which method a gas turbine blade (2) is conveyed past one or more grinding machines (70, 70') in such a way that the desired contour is achieved as a result of following a sequence of movements stored in a data memory (21), said method comprising a computer-controlled robot (10) for conveying an individual gas turbine blade (2), at least one grinding machine (70, 70') within the radius of action (12) of the robot (10) for the metal-cutting machining of the said gas turbine blade (2), and also a computer unit (20) for controlling the robot (10), which computer unit comprises a data memory (21) in which the sequence of movements of said robot (10) is stored, wherein the at least one grinding machine (70, 70') has a tool (71, 71') and also a sensor for the contact pressure of the workpiece, the measuring-signal output of which sensor is connected to the computer unit (20),**characterised in that** the stored sequence of movements is designed for transforming a blade from a statistical average state of wear which has been ascertained beforehand to a design contour which has likewise been ascertained or calculated beforehand.

2. Arrangement according to Claim 1, **characterised in that** there is provided on the robot (10) a gripping arm (11) by means of which it is possible to autonomously grip gas turbine blades (2) at their bases; wherein the gripping arm (11) is preferably configured in an exchangeable manner and a magazine (40) for different gripping arms (41, 42, 43) is provided, from which the robot (10) can help itself autonomously; and wherein there is also preferably provided a robot tool (81) by which automatic exchanging of the tool (71, 71') on the grinding machine (70, 70') is possible.

3. Arrangement according to Claim 1 or 2, **characterised in that** the tool is configured as a grinding disc (71, 71'), and that the axes of movement of the robot (10) are oriented in such a way that the elements of idle time during movements perpendicular to the grinding disc (71, 71') are as small as possible.

4. Arrangement according to one of Claims 1 to 3, **characterised in that** a sensor (50) for measuring the length of a gas turbine blade (2) is provided.

5. Arrangement according to one of Claims 1 to 4, **characterised in that** the grinding machine for the metal-cutting machining of a workpiece which is applied with contact force against the working point comprises a rotating grinding disc (71) which is driven by a motor (72); that said grinding disc is mounted so as to be displaceable on a path in the direction of the application of pressure; and that a device (75, 76) for generating a defined contact pressure (78) is provided.

6. Arrangement according to Claim 5, **characterised in that** the path (74) on which the grinding disc (71) is displaceable lies in the plane of the grinding disc and is rectilinear or circular.

7. Arrangement according to Claim 6, **characterised in that** a pendulum suspension (73) for the grinding disc (71), and preferably also for the motor (72), is provided.

8. Arrangement according to one of Claims 5 to 7, **characterised in that** the path (74) on which the grinding disc (71) is displaceable is designed in such a way that, in the event of failure of the driving unit (75) for generating or regulating the contact pressure, said grinding disc (71) is moved away from the workpiece autonomously, preferably as a result of gravity.

## Revendications

1. Dispositif pour la réalisation d'un procédé pour la restauration d'un contour optimisé des bords d'entrée de pales de turbines à gaz, dans lequel une pale de turbine à gaz (2) est passée dans une ou plusieurs rectifieuse(s) (70, 70') de façon à ce que le contour souhaité soit obtenu en suivant un déroulement de mouvement enregistré dans une mémoire de données (21), comprenant un robot (10) contrôlé par un ordinateur pour le guidage d'une pale de turbine à gaz (2) individuelle, au moins une rectifieuse (70, 70') dans le rayon d'action (12) du robot (10) pour l'usinage par enlèvement de copeaux de cette pale de turbine à gaz (2), ainsi qu'une unité de calcul (20) pour le contrôle du robot (10), qui comprend une mémoire de données (21), dans laquelle le déroulement du mouvement du robot (10) est enregistré, l'au moins une rectifieuse (70, 70') comprenant un outil (71, 71') ainsi qu'un capteur pour la pression d'appui de la pièce, dont la sortie de signal de mesure est reliée avec l'unité de calcul (20), **caractérisé en ce que** le déroulement de mouvement enregistré est conçu pour faire passer une pale d'un état usé moyen déterminé préalablement de manière statistique à un contour de conception également déterminé préalablement ou calculé.

2. Dispositif selon la revendication 1, **caractérisé en ce que**, sur le robot (10), un bras de préhension (11) est prévu, avec lequel la préhension automatique de pales de turbines à gaz (2) est possible au niveau de leurs pieds ; le bras de préhension (11) étant conçu de préférence de façon à être interchangeable et un chargeur (40) pour différents bras de préhension (41, 42, 43) étant prévu, dans lequel le robot (10) peut se servir automatiquement ; et de préférence un outil de robot (81) est prévu, grâce auquel un changement automatique de l'outil (71, 71') est possible au niveau de la rectifieuse (70, 70').

3. Dispositif selon la revendication 1 ou 2, **caractérisé en ce que** l'outil est conçu comme une meule (71, 71') et **en ce que** les axes de mouvement du robot (10) sont orientés de façon à ce que les éléments de retard perpendiculaires à la meule (71, 71') soit les plus faibles possibles.

4. Dispositif selon l'une des revendications 1 à 3, **caractérisé en ce qu'**un capteur (50) est conçu pour la mesure de la longueur d'une pale de turbine à gaz (2).

5. Dispositif selon l'une des revendications 1 à 4, **caractérisé en ce que** la rectifieuse comprend, pour l'usinage par enlèvement de copeaux d'une pièce appuyée avec une force d'appui contre un point de travail, une meule (71) entraînée par un moteur (72) ; **en ce que** la meule est logée de manière coulissante dans la direction de l'appui sur une piste ; et **en ce qu'**un dispositif (75, 76) est prévu pour l'application d'une pression d'appui (78) définie.

6. Dispositif selon la revendication 5, **caractérisé en ce que** la piste (74), sur laquelle la meule (71) coulisse, se trouve dans le plan de la meule et est linéaire ou circulaire.

7. Dispositif selon la revendication 6, **caractérisé en ce qu'**une suspension oscillante (73) est prévue pour la meule (71), de préférence également pour le moteur (72).

8. Dispositif selon l'une des revendications 5 à 7, **caractérisé en ce que** la piste (74), sur laquelle la meule (71) coulisse, est conçue de façon à ce que, lors d'une défaillance de l'unité d'entraînement (75), pour l'application ou la régulation de la pression d'appui, la meule (71) soit éloignée automatiquement, de préférence grâce à la gravitation, de la pièce.
